**Europäisches Patentamt**

(19) **European Patent Office**

**Office européen des brevets**

(11) Veröffentlichungsnummer: **0 286 040**
**B1**

(12) # EUROPÄISCHE PATENTSCHRIFT

(45) Veröffentlichungstag der Patentschrift:
**27.12.90**

(21) Anmeldenummer: **88105344.1**

(22) Anmeldetag: **02.04.88**

(51) Int. Cl.⁵: **G03B 15/02**

54 **Anordnung zum Richten von Licht, insbesondere für fotografische Zwecke.**

30 Priorität: **06.04.87 DE 3711568**

43 Veröffentlichungstag der Anmeldung:
**12.10.88 Patentblatt 88/41**

45 Bekanntmachung des Hinweises auf die Patenterteilung:
**27.12.90 Patentblatt 90/52**

84 Benannte Vertragsstaaten:
**AT CH DE LI**

56 Entgegenhaltungen:
**EP-A- 0 077 986**
**DE-A- 2 542 049**
**DE-A- 2 729 182**
**DE-U- 7 405 896**
**GB-A- 2 100 399**

73 Patentinhaber: **Hitz, Peter J., Schlaitdorfer Weg 9,**
**D-7447 Aichtal(DE)**

72 Erfinder: **Hitz, Peter J., Schlaitdorfer Weg 9,**
**D-7447 Aichtal(DE)**

74 Vertreter: **Wolf, Eckhard, Dr.-Ing.,**
**Eugensplatz 5 Postfach 13 10 01, D-7000 Stuttgart 1(DE)**

ACTORUM AG

## Beschreibung

Die Erfindung betrifft eine Anordnung zum Richten von Licht, insbesondere für fotografische Zwecke, mit einer an einer Lichtaustrittsöffnung einseitig offenen Lichtwanne, mit mindestens einer vorzugsweise als Blitzlampe ausgebildeten Hauptlichtquelle und einer innerhalb der Lichtwanne angeordneten, vorzugsweise als Halogenlampe ausgebildeten Einstell-Lichtquelle und mit einem im Bereich der Lichtsaustrittsöffnung der Lichtwanne angeordneten Lichtdiffusor.

In der professionellen Fotografie dienen Studioleuchten, die das Licht in einer vorbestimmten Weise auf das Objekt werfen, als Vorsatzgeräte für Blitzgeräte hoher Leistung. Je nach den zu stellenden Anforderungen kann damit das zu fotografierende Objekt einem weichen diffusen Licht oder einem harten Spotlicht oder einem Licht, dessen Stärke in einer vorgegebenen Richtung abnimmt oder einen vorgegebenen Fahrverlauf aufweist, ausgesetzt werden.

Eine Lichtdiffusions- und Richtvorrichtung ist beispielsweise aus der DE-A-2 729 182, eine Studioleuchte hoher Lichtleistung und großer Abstrahlfläche aus der DE-B-2 509 990 und aus der EP-A-0 077 986 bekannt. Bei diesen Geräten ist - wie auch bei anderen professionellen Geräten - nur eine Verwendung von schweren Studio-Blitzgeräten aus dem professionellen Bereich möglich.

Bei den bekannten Diffusions- und Richtvorrichtungen ist kein separates Einstell-Licht zum Ausrichten und zur Kontrolle der Lichtführung vorgesehen. Ein Einstell-Licht ist somit meist nur dann vorhanden, wenn das in die Lichtdiffusions- oder Richtvorrichtung einzusetzende Blitzgerät über ein solches Einstell-Licht verfügt. Das bedingt den Einsatz teurer professioneller Blitzgeräte, die ein verhältnismäßig hohes Gewicht und relativ große Abmessungen aufweisen. Solche Geräte können nur durch geschulte Fachkräfte benützt werden.

Einem Freizeitfotografen oder Fotoamateur ist es bisher nicht möglich, durch die ihm schon aus finanziellen Gründen lediglich zur Verfügung stehenden kleinen Amateur-Blitzgeräte verschiedener Hersteller und unterschiedlicher Gestaltung die bisher bekannten Lichtdiffusions- und Richtvorrichtungen zu nutzen, um zu einigermaßen ansprechbaren Ergebnissen zu gelangen. Die bisher bekannten Vorrichtungen weisen keine Möglichkeit zum Befestigen von kleinen handelsüblichen Amateur-Blitzgeräten auf. Amateur-Blitzgeräte verfügen im allgemeinen nicht über ein integriertes Einstell-Licht, das eine kontrollierte Lichtführung ermöglicht. Da bei den bekannten Lichtdiffusions- und -richtvorrichtungen eine Befestigungseinrichtung für ein Einstell-Licht nicht vorgesehen ist, verbietet sich auch aus diesem Grund ihre Verwendung für den Fotoamateur.

Zum Erzeugen von speziellen Lichteffekten, beispielsweise von Abschattungen, Lichtverläufen oder aufgesetzten Glanzlichtern, können die bekannten Vorrichtungen mit aufwendigen und teuren Zusatzeinrichtungen ausgestattet werden. Diese Zusatzeinrichtungen müssen, bedingt durch ihr Gewicht, fest mit den Diffusions- und Richtvorrichtungen verbunden werden. Ist schon für eine einfache Ausführungsform der bekannten Vorrichtungen ein stabiles Stativ erforderlich, so müssen bei einer Verwendung von Zusatzeinrichtungen besonders schwere, große und teure Stative verwendet werden. Solche Stative können also nur stationär eingesetzt werden und sind schon aus diesem Grund für Fotoamateure nicht brauchbar.

Eine preisgünstige Lichtdiffusions- und -richtvorrichtung, die eine kontrollierte Lichtführung durch ein getrennt einsetzbares Einstell-Licht erlaubt und bei der handelsübliche Amateur-Blitzgeräte verwendet werden können, ist bisher nicht bekannt geworden.

Weiter sind die bekannten Vorrichtungen zum Diffundieren und Richten von Licht so voluminös und schwer, daß sie für einen Freizeitfotografen uninteressant sind.

Vorteile der Erfindung

Die erfindungsgemäße Anordnung zum Richten von Licht mit den kennzeichnenden Merkmalen des Hauptanspruchs hat demgegenüber den Vorteil, daß sie nur ein geringes Gewicht aufweist, bei Nichtgebrauch wenig Platz beansprucht, leicht zu transportieren ist und kurzfristig und problemlos wieder aufgebaut werden kann.

Durch die in den Unteransprüchen aufgeführten Maßnahmen sind vorteilhafte Weiterbildungen und Verbesserungen der im Hauptanspruch angegebenen Anordnung möglich.

Besonders vorteilhaft ist, daß die erfindungsgemäße Anordnung kostengünstig hergestellt und zu einem attraktiven Preis dem Fotoamateur verkauft werden kann. Der Fotoamateur kann ein Amateur-Blitzgerät oder mehrere davon verwenden, selbstverständlich auch solche, die er schon im Besitz hat. Die Blitzgeräte können von verschiedenen Herstellern stammen und unterschiedliche Dimensionen aufweisen. Der Amateur kann aber ohne weiteres auch andere Lichtquellen verwenden. Außerdem ist er bei der Auswahl des Einstell-Lichts nicht an ein bestimmtes Fabrikat gebunden, er kann praktisch eine beliebige Lampe einsetzen.

Bei der erfindungsgemäßen Anordnung lassen sich Amateur-Blitzgeräte und andere Lichtquellen einfach, schnell und stabil durch ein verstellbares Befestigungs-System mit der Lichtwanne verbinden. Die einzelnen Bauelemente der Anordnung sind vorteilhafterweise aus einem flexiblen Kunststoff, beispielsweise Polystyrol, gefertigt. Dieser Kunststoff weist vorteilhafte Eigenschaften wie Schlagfestigkeit, Biegsamkeit, Hitze- und Kältebeständigkeit auf und läßt sich gut verarbeiten.

Bei der erfindungsgemäßen Anordnung ist eine Lampeneinheit zur Verwendung für das Einstell-Licht vorgesehen. Dadurch ist es dem Benutzer beim Einsatz von Amateur-Blitzgeräten oder anderen Lichtquellen möglich, die Lichtführung der Hauptlichtquellen zunächst mit dem Einstell-Licht zu simulieren und ein zu erwartendes Ergebnis der Beleuchtung vorab zu beurteilen.

Dem Freizeitfotografen und dem Fotoamateur ist mit Hilfe der erfindungsgemäßen Anordnung ein kreatives Schaffen möglich, das bisher wegen des erforderlichen Einsatzes teurer Geräte dem professionellen Fotografen vorbehalten war.

Von weiterem Vorteil ist, daß Effektfolien schnell und einfach mit der erfindungsgemäßen Anordnung verbunden und wieder von ihr gelöst werden können. Dadurch wird es möglich, zu einem günstigen Preis eine Vielzahl von genau definierbaren Lichteffekten zu erzeugen, beispielsweise hartes Spotlicht, weiches Spotlicht, Lichtverläufe und Farbeffekte. Durch das erfindungsgemäß äußerst geringe Gewicht der Folien und der anderen Effekteinrichtungen, wie Abschattungsklappen und Rollos, wird damit das Gesamtgewicht der Anordnung nur unwesentlich erhöht.

Infolge des geringen Gewichts und des geringen Volumens der erfindungsgemäßen Anordnung und der Zubehörteile kann der Fotoamateur auf schwere, große und teure Stative verzichten, er kann vielmehr seine gewohnten billigeren und leichteren Stative mit Stativgalgen und Gegengewicht verwenden.

Weitere Merkmale und Vorteile der Erfindung ergeben sich aus der Beschreibung der Ausführungsbeispiele im Zusammenhang mit der Zeichnung, in der Ausführungsbeispiele schematisch dargestellt sind. Die Merkmale können einzeln oder in beliebiger Kombination verwirklicht sein. Die Erfindung soll nicht auf die Ausführungsbeispiele beschränkt sein, sie soll sich vielmehr auf alle Abänderungen und Ausgestaltungen, die durch die Ansprüche und die offenbarten Merkmale abgedeckt sind, erstrecken.

Zeichnung

Ausführungsbeispiele der Erfindung sind in den Figuren dargestellt und in der nachfolgenden Beschreibung näher erläutert.

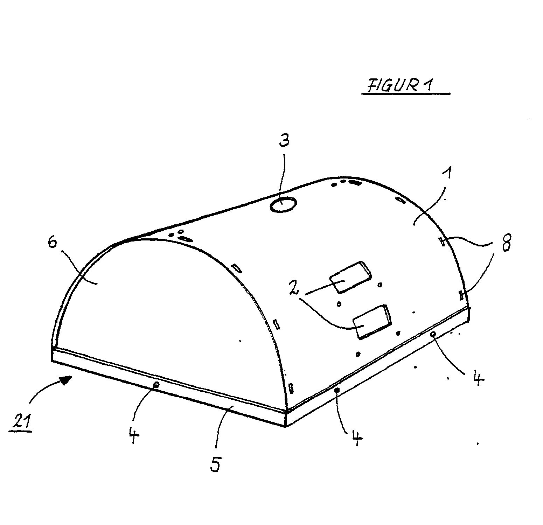

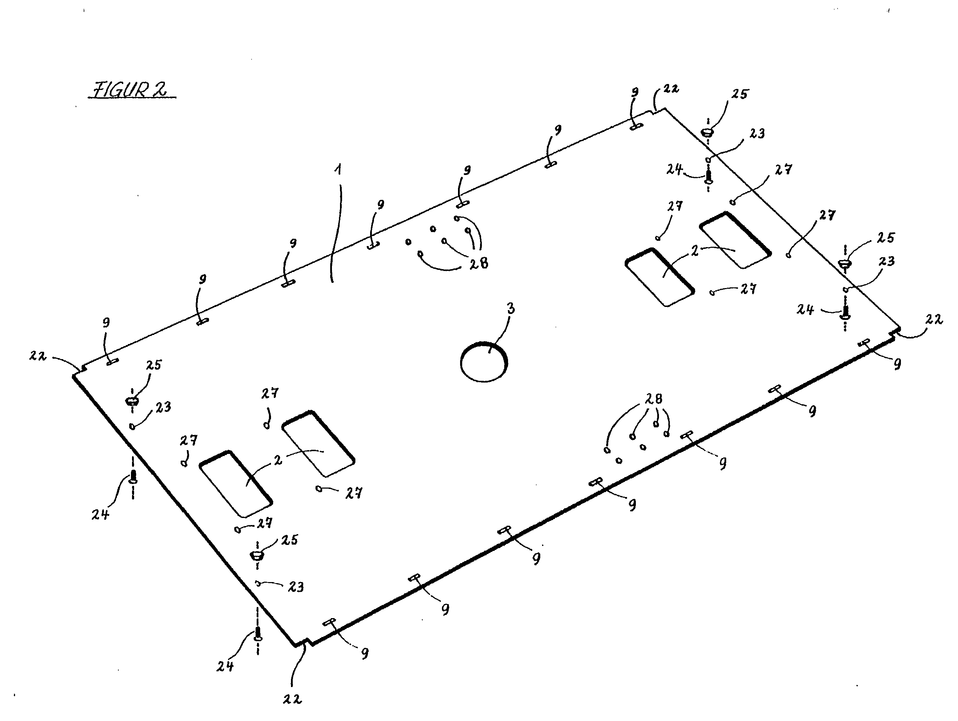

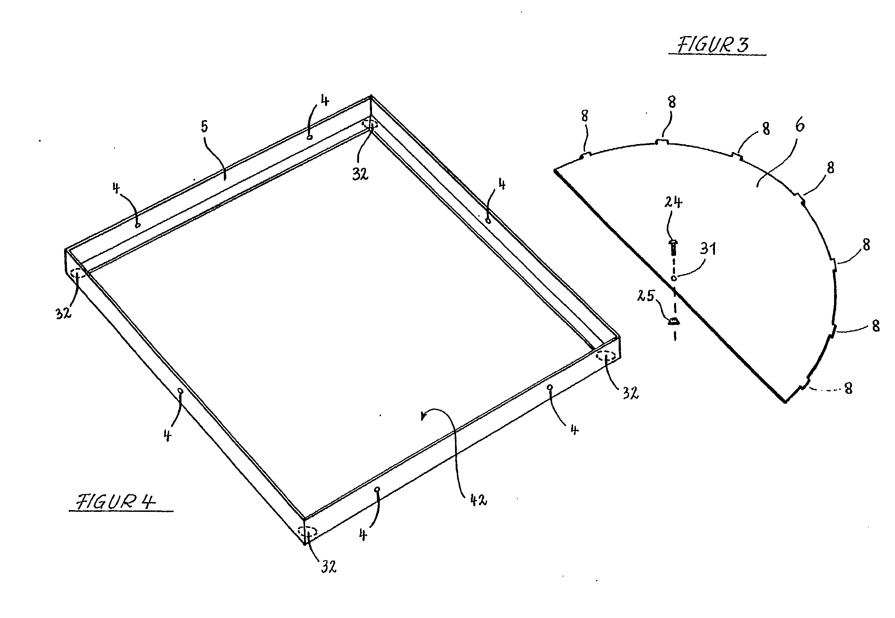

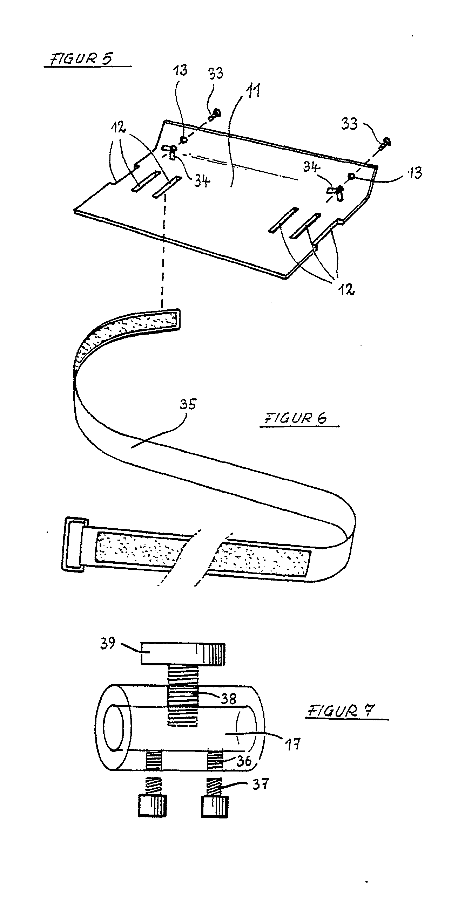

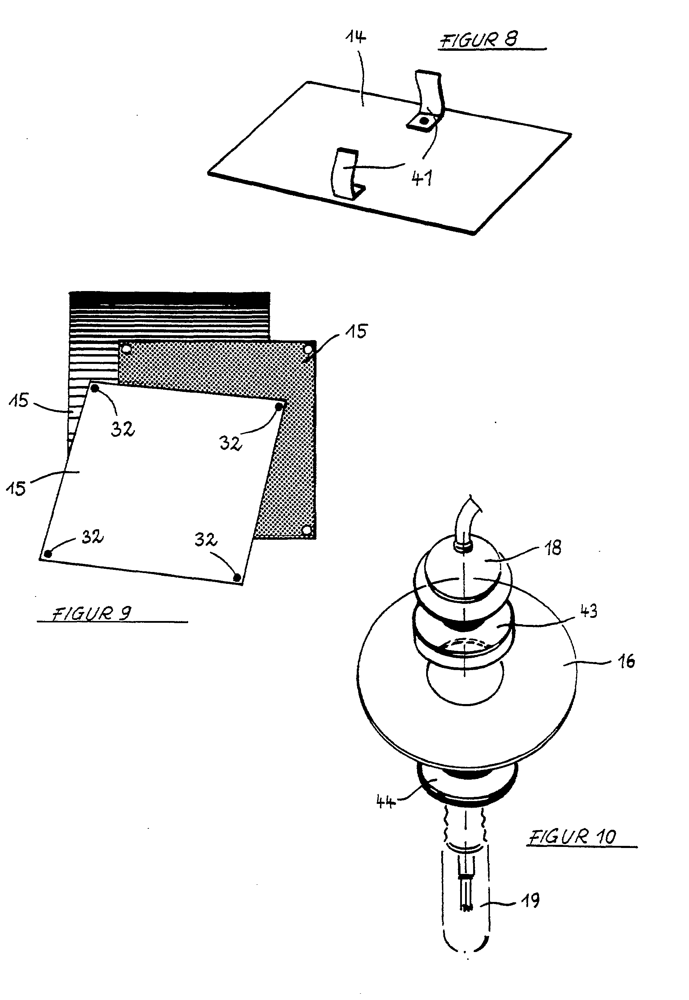

Figur 1 zeigt perspektivisch eine fertig montierte Lichtwanne. Figur 2 zeigt eine Gehäusemantelplatte vor der Montage. In Figur 3 ist eines der beiden Seitenteile zu sehen, in Figur 4 ein Gehäuserahmen. Figur 5 zeigt eine Platte zum Befestigen einer Hauptlichtquelle. Figur 6 ist eine schematische Darstellung eines Haltebands für Lichtquellen. Figur 7 zeigt eine Muffe für die Stativbefestigung. In Figur 8 ist eine Abdeckplatte für Lichteintrittsöffnungen gezeigt. Figur 9 zeigt Beispiele verschiedener Diffusor- und Effektfolien.

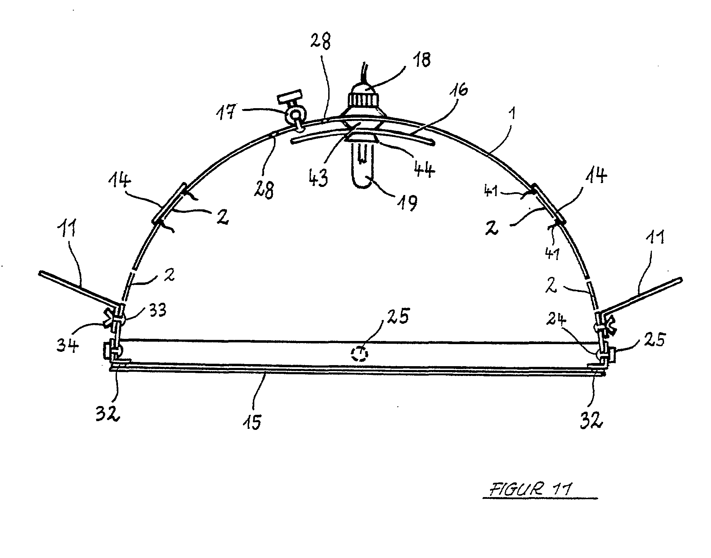

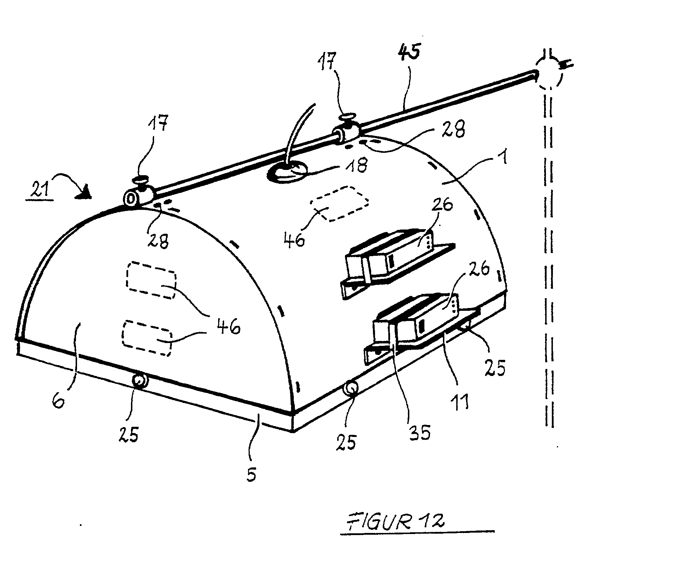

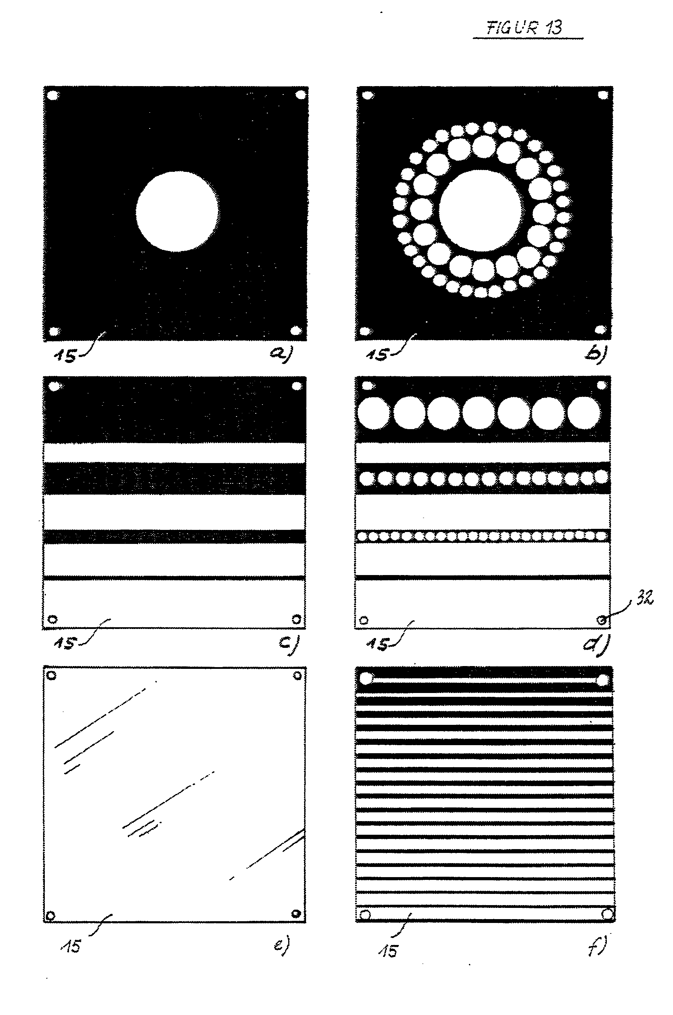

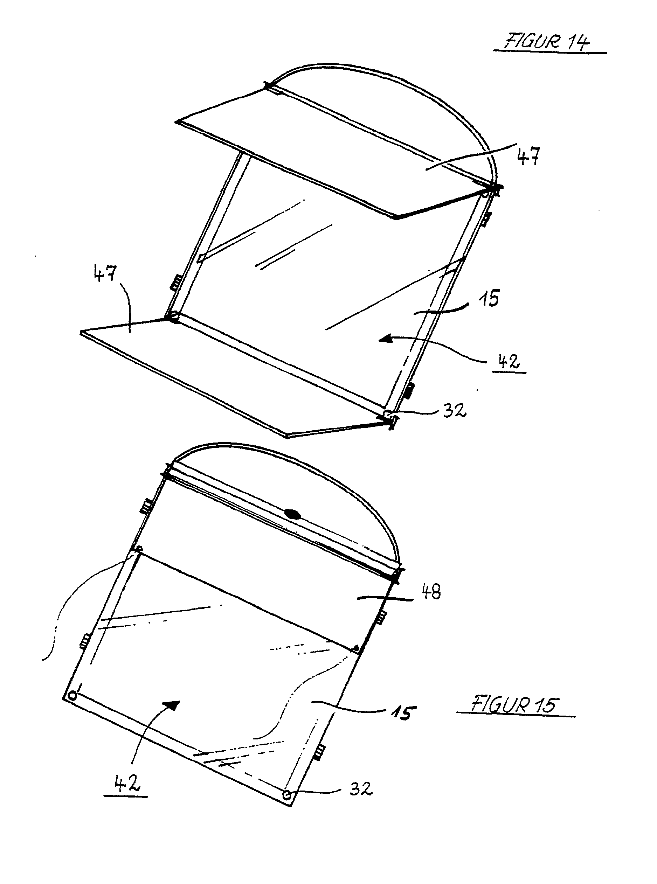

Figur 10 zeigt ein Beispiel einer Lampeneinheit für das Einstell-Licht. Figur 11 ist ein Querschnitt durch eine montierte Lichtwanne. Figur 12 zeigt perspektivisch eine an einer Stativstange befestigte Lichtwanne mit montierten Blitzgeräten. In Figur 13 sind weitere Beispiele für Diffusor- und Effektfolien mit verschiedenen Lichtwirkungen gezeigt. Figur 14 zeigt an eine Lichtwanne montierte Klappenelemente zum Abschatten der Lichtaustrittsöffnung, Figur 15 ein an einer Lichtwanne montiertes Rollo zum Vermindern der Lichtausstrahlung.

Beschreibung der Ausführungsbeispiele

Figur 1 zeigt perspektivisch eine Lichtwanne 21 mit einer Gehäusemantelplatte 1, Seitenteilen 6 und einem Gehäuserahmen 5. In der Mantelplatte 1 sind Öffnungen 2 für Hauptlichtquellen und eine Öffnung 3 für ein Einstell-Licht zu sehen.

Figur 2 zeigt rechteckige Gehäusemantelplatte 1. Die Mantelplatte 1 besteht vorzugsweise aus Polystyrol, da dieses Material sich durch Elastizität, Schlagfestigkeit, Hitze- und Kältebeständigkeit und leichte Verarbeitungsmöglichkeit auszeichnet. An den vier Ecken der Gehäusemantelplatte 1 ist jeweils eine Auskerbung 22 zu sehen. Nach dem Einsetzen der Platte 1 in den Gehäuserahmen 5 kann ein Teil der Gehäusemantelfläche über den Gehäuserahmen 5 hinaus überstehen. Entlang der Längskante der Platte 1 sind Aussparungen 9 angebracht, die zur Aufnahme von Zapfen 8 der Seitenteile 6 dienen. Die Seitenteile 6 legen sich nach der Montage innen an den Gehäuserahmen 5 und an die Platte 1 eben und unverrückbar an. Die Zapfen 8 sind dabei in die Aussparungen 9 eingerastet.

An der schmalen Seite der Platte 1 sind jeweils zwei Bohrungen 23 angebracht. In diese Bohrungen können Befestigungselemente wie Rändelschrauben 24 eingesetzt werden. Diese Rändelschrauben 24 werden dann weiter durch Bohrungen 4 des Rahmens 5 geführt und auf der Gegenseite dann beispielsweise mit Rändelmuttern 25 gesichert. Die Aussparungen 2 sind Lichteintrittsöffnungen, durch die jeweils eine Hauptlichtquelle 26, beispielsweise ein Amateur-Blitzgerät, ihr Licht in den Innenraum der Lichtwanne 21 abgeben kann. Neben den Aussparungen 2 befinden sich Bohrungen 27. Diese Bohrungen dienen dazu, Positionierungselemente 11, die zum Befestigen einer Hauptlichtquelle 26 dienen, mit dem Gehäusemantel 1 zu verschrauben.

Im Bereich der Längsseiten der Gehäusemantelplatte 1 sind Bohrungen 28 vorgesehen, die zum Befestigen einer Haltevorrichtung 17 dienen. Es sind mehrere solche Bohrungen 28 paarweise hintereinander angeordnet, um eine Verstellung der Haltevorrichtung 17 zu ermöglichen.

Im Zentrum der Mantelplatte 1 ist eine runde Öffnung 3 vorgesehen, die zur Aufnahme einer Lampenfassung 18 dient. In die Lampenfassung 18 kann ein Einstell-Licht 19, vorzugsweise eine Halogen-Glühlampe von 150 Watt, eingesetzt werden.

Figur 3 zeigt eines der beiden Seitenteile 6. Beide Seitenteile sind gleich in Größe und Form und bestehen vorzugsweise ebenfalls aus Polystyrol. In der Mitte der geraden Grundseite des Seitenteils 6 ist eine Bohrung 31 vorgesehen, durch die wieder eine Schraube 24 durchgesteckt werden kann. Die Schraube 24 erstreckt sich bei der fertig montierten Lichtwanne dann weiter durch eine zugehörige Bohrung 4 im Gehäuserahmen 5 und kann auf der Gegenseite mit einer Rändelmutter 25 gesichert werden. An der halbkreisförmigen Rundung des Seitenteils 6 befinden sich die Zapfen 8, die in die Schlitze 9 der Mantelplatte 1 eingeführt werden können.

Der Gehäuserahmen 5 ist in Figur 4 gezeigt. Im Ausführungsbeispiel sind Winkelprofile verwendet, die zum Erzielen eines geringen Gewichts aus Aluminium bestehen. Der Gehäuserahmen hat eine im wesentlichen quadratische oder rechtwinklige Form. In Figur 4 sind wieder die Bohrungen 4 zum Befestigen des Gehäusemantels 1 und der Seitenteile 6 zu sehen. Weiter sind Halterungselemente 32, vorzugsweise aus Klettband, angedeutet, die zum Befestigen von Effektfolien 15 dienen. Die Halterungselemente 32 können selbstverständlich auf dem Rahmen 4 an einer beliebigen Stelle und in beliebiger Länge angebracht werden.

Figur 5 stellt ein Positionierungselement 11 für eine Hauptlichtquelle 26 dar. Das Element 11 ist als abgewinkelte rechteckige Fläche ausgebildet und mit Bohrungen 13 an der kleineren Seitenfläche versehen. Durch die Bohrungen 13 kann das Element 11 mit Hilfe von Schrauben 33 und Flügelmuttern 34 in den Bohrungen 27 des Mantels 1 befestigt werden. Die größere Fläche des Elements 11 weist verschiedene Öffnungen und Stanzungen 12 auf. Die Öffnungen 12, die auch an anderen Stellen angebracht sein können, dienen zur Aufnahme eines Haltebands 35, vorzugsweise eines Klettbands. Durch eine entsprechende Auswahl von Öffnungen 12 kann ein als Hauptlicht 26 dienendes Amateur-Blitzgerät beliebiger Größe ohne weiteres befestigt werden.

Figur 6 zeigt ein Halteband 35.

In Figur 7 ist eines der beiden Befestigungselemente 17 für die Verbindung der Lichtwanne mit einem Stativrohr 26 gezeigt. Als Befestigungselement 17 ist eine Rohrmuffe verwendet. Die Muffe ist auf ihrer Unterseite mit zwei Gewindebohrungen 36 versehen, die in Verbindung mit zwei Schrauben 37 und entsprechend ausgewählten Bohrungen 28 im Gehäusemantel 1 zum Befestigen des Elements 17 an der Lichtwanne 21 dienen. Auf der Oberseite der Muffe 17 ist eine Gewindebohrung 38 angeordnet, in die eine Rändelschraube 39 eingedreht werden kann. Mit Hilfe der Rändelschraube 39 kann dann das Befestigungselement 17 auf dem Stativgalgen 26 festgelegt und somit die Lichtwanne 21 am Stativ befestigt werden.

In Figur 8 ist eine rechteckige Abdeckplatte 14, ebenfalls vorzugsweise aus Polystyrol, gezeigt, die zum Abdecken von Öffnungen 2 dient, falls diese nicht mit einem Hauptlicht 26 bestückt werden sollen. In der Mitte der Längskanten der Abdeckplatte 14 ist jeweils eine Haltefeder 41 angebracht. Die Haltefedern 41 halten die Abdeckplatte 14 auf der Gehäusemantelplatte 1 fest; die Abdeckplatten 14 können aber auch ebenso leicht und schnell wieder entfernt werden.

In Figur 9 - wie auch in Figur 12 - sind einige Beispiele von Folien zum Erzielen von diffusem und/oder Effektlicht gezeigt. Die Folien können aus klarem, mattem, farblosem oder farbigen Folienmaterial hergestellt sein. Die Folien sind so groß, daß sie auf die Lichtaustrittsöffnung 42 der Lichtwanne 21 passen. An ihren Ecken sind sie mit Halterungselementen 32 der schon erwähnten Art versehen. Die Halterungselemente 32 können sich selbstverständlich über die ganzen Kanten der Folien 15 erstrecken.

Figur 10 zeigt ein Ausführungsbeispiel für die Anordnung eines Einstell-Lichts 18, 19. eine Glühlampenfassung 18, ein Distanzstück 43, eine Wärmeschutzplatte 16 und ein Gewindeteil 44 sind in die Öffnung 3 der Gehäusemantelplatte 1 eingeschraubt.

Figur 11 ist ein Querschnitt durch die montierte Lichtwanne. Gleiche Bauteile sind wieder mit den gleichen Bezugszeichen versehen. Ihre Bedeutung ist aus der Beschreibung zu den vorangehenden Zeichnungsfiguren ersichtlich.

In Figur 12 ist perspektivisch gezeigt, wie eine Lichtwanne 21 an einen Galgen eines Stativs 45 gehängt ist. In dieser Figur ist auch deutlich zu sehen, wie zwei Amateur-Blitzgeräte 26 auf Positionierungselemente 11 mit Hilfe von Klettbändern 35 angeordnet sind. Für avancierte Amateure kann die Möglichkeit vorgesehen werden, zum Erzielen einer besonders hohen Lichtstärke oder von besonderen Lichteffekten zusätzliche Ausnehmungen 46 für Hauptlichter 26 vorzusehen.

In Figur 13 sind Ausführungsbeispiele für Diffusor- und Effektfolien 15 gezeigt. Die Folie nach Figur 13a ergibt ein zentriertes Spotlicht. Die Folie nach Figur 13b ergibt ein weich verlaufendes Spotlicht, die Folie 13c einen Lichtverlauf von dunkel bis hell, die Folie nach Figur 13d einen weicheren Lichtverlauf von dunkel bis hell. Die Effektfolie nach Figur 13e ist ein Beispiel für eine lichtdurchlässige Farbfolie beliebiger Färbung. Die Folie nach Figur 13f kann durch einen entsprechenden Farbaufdruck einen Farbverlauf von hell bis dunkel in bestimmten Farben ergeben.

Figur 14 stellt als Zusatzeinrichtung Klappen 47 aus lichtundurchlässigem Material, vorzugsweise wieder Polyäthylen, vor. Je nach Stellung kann stufenlos ein teilweise abgeschatteter Lichtaustritt aus der Lichtwanne 21 bewirkt werden.

In Figur 15 ist als Zusatzeinrichtung ein Rollo 48, vorzugsweise aus undurchlässigem Gewebe, gezeigt. Mit Hilfe des Rollos 48 kann die Fläche der Lichtaustrittsöffnung 42 stufenlos verkleinert werden.

Selbstverständlich ist es möglich, die Folien der Figuren 9 und 13, die Klappen der Figur 14 und ein Rollo der Figur 15 beliebig zu kombinieren.

## Patentansprüche

1. Anordnung zum Richten von Licht, insbesondere für fotografische Zwecke, mit einer an einer Lichtaustrittsöffnung einseitig offenen Lichtwanne (21), mit mindestens einer vorzugsweise als Blitzlampe ausgebildeten Hauptlichtquelle (26) und einer innerhalb der Lichtwanne angeordneten, vorzugsweise als Halogenlampe ausgebildeten Einstell-Lichtquelle (19) und mit einem im Bereich der Lichtaustrittsöffnung der Lichtwanne (21) angeordneten Lichtdiffusor (15), dadurch gekennzeichnet, daß die Lichtwanne (21) mindestens eine Lichtwannenmantelöffnung (2) aufweist, daß auf der Außenseite der Lichtwanne im Bereich der Lichtwannenmantelöffnung (2) eine Halte- und/oder Positionierungsvorrichtung (11) angeordnet ist und daß die Hauptlichtquelle (26) auf der Außenseite der Lichtwanne (21) mit zur Lichtwannenmantelöffnung (2) weisender Lichtaustrittsfläche an der Halte- und/oder Positionierungsvorrichtung (11) lösbar befestigbar ist.

2. Anordnung nach Anspruch 1, dadurch gekennzeichnet, daß die Lichtwanne (21) mehrere wahlweise durch Abdeckplatten (14) verschließbare und/oder mit Positionierungsvorrichtungen (11) und Hauptlichtquellen (26) bestückbare Lichtwannenmantelöffnungen (2) aufweist.

3. Anordnung nach einem der Ansprüche 1 bis 2, dadurch gekennzeichnet, daß die Positionierungsvorrichtung (11) als Winkelplatte ausgebildet ist, deren einer Schenkel am Lichtwannenmantel (1) lösbar befestigt ist und deren anderer Schenkel mehrere rasterartige angeordnete Ausnehmungen oder Schlitzöffnungen zur Aufnahme eines Halteorgans (35) für die Hauptlichtquelle (26) aufweist.

4. Anordnung nach Anspruch 3, dadurch gekennzeichnet, daß das Halteorgan als Gurt oder als Klettband (35) ausgebildet ist.

5. Anordnung nach einem der Ansprüche 1 bis 4, dadurch gekennzeichnet, daß die Lichtwanne (21) einen im wesentlichen halbzylindrisch gekrümmten Mantelteil (1) aufweist und daß an dem halbzylindrischen Mantelteil in Umfangsrichtung einen Rasterabstand voneinander aufweisende Befestigungsöffnungen (8) oder Befestigungsorgane zur variablen Ausrichtung der Lichtwanne (21) an einem Stativ (45) angeordnet sind.

6. Anordnung nach einem der Ansprüche 1 bis 5, dadurch gekennzeichnet, daß im Rand- oder Eckenbereich der Lichtaustrittsöffnung der Lichtwanne (21) vorzugsweise als Klettbandhälften ausgebildete Halteelemente (32) zur Anbringung von vorzugsweise mit den anderen Klettbandhälften versehenen Diffusorplatten (15) angeordnet sind.

7. Anordnung nach einem der Ansprüche 1 bis 6, dadurch gekennzeichnet, daß der Diffusor (15) eine mit einem vorgegebenen Lichtaustrittsmuster versehene Platte oder Folie ist.

8. Anordnung nach einem der Ansprüche 1 bis 7, dadurch gekennzeichnet, daß im Bereich der Lichtaustrittsöffnung der Lichtwanne insbesondere als Klappen (47) oder Rollos (48) ausgebildete Abschattorgane angeordnet sind.

9. Anordnung nach einem der Ansprüche 1 bis 8, dadurch gekennzeichnet, daß die Lichtwanne (21) aus einer zu einem halbzylindrischen Mantelteil (1) biegsamen Flachmaterialzuschnitt sowie zwei mit dem halbzylindrisch gebogenen Mantelteil (1) lösbar verbindbaren, im Umriß halkreisförmigen Stirnplatten besteht, und daß die Lichtaustrittsöffnung durch einen die freien Kanten des halbzylindrischen Mantelteils und der Stirnplatten umfassenden, vorzugsweise aus Profil- oder Winkelstäben zusammengesetzten rechteckigen oder quadratischen Rahmen (5) begrenzt ist.

10. Anordnung nach Anspruch 9, dadurch gekennzeichnet, daß die Halteelemente (32) für die Diffusorplatte oder -folie an dem Rahmen (5) angeordnet sind.

11. Anordnung nach einem der Ansprüche 1 bis 10, dadurch gekennzeichnet, daß die Einstell-Lichtquelle (19) getrennt von der Hauptlichtquelle (26) in einer hierfür vorgesehenen zentral angeordneten Mantelöffnung montierbar ist.

12. Anordnung nach Anspruch 11, dadurch gekennzeichnet, daß zwischen der Einstell-Lichtquelle (19) und dem benachbarten Mantelteil (1) der Lichtwanne ein Wärmeschutzblech (16) angeordnet ist.

## Claims

1. Light-directing arrangement, especially for photographic purposes, with a light casing (21), which is singlesidedly open at one light-outlet aperture, with at least one main light source (25), preferably arranged to be a flash light, and a focus light source (19), preferably arranged to be a halogen lamp, and with a light diffusor (15), arranged in the area of the light-outlet aperture of the light case (21), characterised in that the light casing comprises at least one light-casing-top opening (2), that a support and/or positioning means (11) is arranged on the outside of the light casing in the area of light-casing-top aperture (2), and that the main light source (26) on the outside of the light casing (21) is detachably mounted to the support and/or positioning means (11) with the light-outlet surface orientated towards the light-casing-top aperture (2).

2. Arrangement according to claim 1, characterised in that the light casing (21) comprises several light-casing-top apertures (2), which can be selectively closed by cover plates (14) and/or equipped with positioning means (11) and main light sources (26).

3. Arrangement according to one of claims 1 to 2, characterised in that the positioning means (11) is constructed as an angled plate, the one shank of which is detachably mounted to the light-casing top (1), and the other shank of which comprises several raster-like arranged cut-outs or slots for accommodating a supporting member (35) for the main light source (26).

4. Arrangement according to claim 3, characterised in that the support member is a strap or a barbed-hook tape (35).

5. Arrangement according to one of claims 1 to 4, characterised in that the light casing (21) comprises a substantially semi-cylindrically curved casing member (1), and that attachment apertures (8) or attachment members, with raster spaces in the circumferential direction, for variable positioning of the light casing (21) on a tripod (4, 5) are arranged at the semi-cylindrical casing member.

6. Arrangement according to one of claims 1 to 5, characterised in that holding members (32), preferably barbed-hook halves, are arranged in the edge- or corner areas of the light-outlet aperture of the light casing (21) to facilitate the attachment of diffusor plates (15), preferably fitted with the other barbed-hook halves.

7. Arrangement according to one of claims 1 to 6, characterised in that the diffusor (15) is a plate or foil with a given light-outlet pattern.

8. Arrangement according to one of claims 1 to 7, characterised in that shading elements, in particular flaps (47) or shutters (48), are arranged in the area of the light-outlet aperture of the light-casing.

9. Arrangement according to one of claims 1 to 8, characterised in that the light casing (21) is composed of a flat material pattern shaped into a semi-cylindrical casing member (1) and two cross-sectionally semi-circular face plates, detachably attached to the semi-cylindrically shaped casing member (1), and that the light-outlet aperture is defined by a rectangular or square frame (5) which embraces the free edges of the semi-cylindrical casing member and the face plates and which is preferably made of profiled or angled bars.

10. Arrangement according to claim 9, characterised in that the support elements (32) for the diffusor plate or -foils are arranged on the frame (5).

11. Arrangement according to one of claims 1 to 10, characterised in that the adjustable light source (19) is mounted separate from the main light source (26) in a casing aperture (3), centrally arranged for said purpose.

12. Arrangement according to claim 1, characterised in that a heat shield (16) is arranged between the adjustable light source (19) and the adjacent casing member (1).

## Revendications

1. Dispositif pour diriger la lumière, en particulier pour des applications photographiques, comprenant une cuve de lumière (21) ouverte unilatéralement sur une ouverture de sortie de lumière, équipée d'au moins une source lumineuse principale (26) réalisée de préférence sous la forme d'une lampe-éclair et d'une source lumineuse de réglage (19) disposée à l'intérieur de la cuve de lumière et réalisée de préférence sous la forme d'une lampe à halogène, et un diffuseur de lumière (15) disposé dans la région de l'ouverture de sortie de lumière de la cuve de lumière (21), caractérisé en ce que la cuve de lumière (21) présente au moins une ouverture (2) dans l'enveloppe de la cuve, que sur la face extérieure de la cuve de lumière est disposé, dans la région de l'ouverture (2) de l'enveloppe de la cuve de lumière, un dispositif de support et/ou de positionnement (11), et que la source lumineuse principale (26) peut être fixée de manière amovible sur le dispositif de support et/ou de positionnement (11), sur la face extérieure de la cuve de lumière (21), l'ouverture (2) de l'enveloppe de la cuve de lumière étant dirigée vers la surface de sortie de lumière.

2. Dispositif selon la revendication 1, caractérisé en ce que la cuve de lumière (21) comprend une pluralité d'ouvertures d'enveloppe de cuve de lumière (2) qui peuvent, au choix, être obturées par des plaques de recouvrement (14) et/ou équipées de dispositifs de positionnement (11) et de sources lumineuses principales (26).

3. Dispositif selon l'une des revendications 1 ou 2, caractérisé en ce que le dispositif de positionnement (11) est conformé en plaque équerre dont l'une des branches est fixée de manière amovible sur l'enveloppe (1) de la cuve de lumière et dont l'autre branche présente une pluralité d'évidements ou de fentes disposés en réseau et destinés à recevoir un organe de fixation (35) pour la source lumineuse principale

4. Dispositif selon la revendication 3, caractérisé en ce que l'organe de fixation est conformé en sangle ou en bande agrippante (35).

5. Dispositif selon l'une des revendications 1 à 4, caractérisé en ce que la cuve de lumière (21) comprend un élément d'enveloppe (1) présentant sensiblement une courbure demi-cylindrique, et que sur l'élément d'enveloppe demi-cylindrique sont disposées des ouvertures de fixation (8) ou organes de fixation présentant un écartement de trame dans le sens périphérique pour permettre une orientation variable de la cuve de lumière (21) sur un pied (45).

6. Dispositif selon l'une des revendications 1 à 5, caractérisé en ce que dans la région des bords ou coins de l'ouverture de sortie de lumière de la cuve de lumière (21) sont disposés des éléments de fixation (32) réalisés de préférence sous la forme de moitiés de bande agrippante pour la mise en place de plaques de diffusion (15) équipées des moitiés associées de la bande agrippante.

7. Dispositif selon l'une des revendications 1 à 6, caractérisé en ce que le diffuseur (15) est une plaque ou une feuille munie d'un dessin de sortie de lumière prédéterminé.

8. Dispositif sleon l'une des revendications 1 à 7, caractérisé en ce que dans la région de l'ouverture de sortie de lumière de la cuve de lumière sont disposés des organes d'obscurcissement conformés notamment en volets (47) ou en stores (48).

9. Dispositif selon l'une des revendications 1 à 8, caractérisé en ce que la cuve de lumière (21) est constituée d'une pièce découpée de matériau plat pouvant être courbée en un élément d'enveloppe (1) semi-cylindrique ainsi que de deux plaques frontales demi-circulaires pouvant être rattachées de manière amovible à l'élément d'enveloppe (1) à courbure demi-cylindrique, et que l'ouverture de sortie de lumière est délimitée par un cadre (5) rectangulaire ou quadratique qui recouvre les bords libres de l'élément d'enveloppe demi-cylindrique et est assemblé de préférence à partir de barres profilées ou de cornières.

10. Dispositif selon la revendication 9, caractérisé en ce que les éléments de fixation (32) pour la plaque ou la feuille de diffusion sont montés sur le cadre (5).

11. Dispositif selon l'une des revendications 1 à 10, caractérisé en ce que la source lumineuse de réglage (19) peut être montée séparément de la source lumineuse principale (26) dans une ouverture (3) de l'enveloppe spécialement prévue à cet effet et disposée de manière centrale.

12. Dispositif selon la revendication 11, caractérisé en ce qu'un écran thermique (16) est disposé entre la source lumineuse de réglage (19) et l'élément voisin de l'enveloppe (1) de la cuve de lumière.

FIGUR 1

FIGUR 2

*FIGUR 3*

*FIGUR 4*

5

4

4

4

4

4

4

32

32

32

32

42

8

8

8

6

8

8

8

8

8

24

31

25

EP 0 286 040 B1

FIGUR 5

FIGUR 6

FIGUR 7

14

_FIGUR 8_

41

15

15

15

32

32

32

32

_FIGUR 9_

18

43

16

44

_FIGUR 10_

19

*FIGUR 11*

FIGUR 12

FIGUR 13

_FIGUR 14_

47

47

15

42

32

48

15

_FIGUR 15_

42

32